# EUROPÄISCHE PATENTSCHRIFT

(11) **EP 1 487 630 B1**
(45) Veröffentlichungstag und Bekanntmachung des Hinweises auf die Patenterteilung: **31.12.2008**
(21) Anmeldenummer: 03722344.3
(22) Anmeldetag: 18.03.2003
(51) Int. Cl.: B29C 70/50, B29B 7/48, B29B 11/16, B29B 11/10, B29B 13/08, B29C 47/00

(54) **VERFAHREN ZUR HERSTELLUNG DUROPLASTISCHER HALBZEUGE**
METHOD FOR PRODUCING DUROPLASTIC SEMI-FINISHED PRODUCTS
PROCEDE DE FABRICATION DE SEMI-PRODUITS THERMODURCISSABLES

(30) Priorität: 18.03.2002 DE 10211920
(43) Veröffentlichungstag der Anmeldung: 22.12.2004
(73) Patentinhaber: Fraunhofer-Gesellschaft zur Förderung der angewandten Forschung e.V., 80686 München (DE)
(72) Erfinder: HENNING, Frank, 76327 Pfinztal (DE); BRÄUNING, Rüdiger, 76703 Kraichtal-Oberöwisheim (DE); TRÖSTE, Stefan, 76137 Karlsruhe (DE); RADTKE, Andreas, 76227 Karlsruhe (DE); KRAUSE, Wenzel, 76185 Karlsruhe (DE); GEIGER, Oliver, 76327 Pfinztal (DE)
(86) Internationale Anmeldenummer: PCT/EP2003/002784
(87) Internationale Veröffentlichungsnummer: WO 2003/078143

(56) Entgegenhaltungen:
- WO-A-02/102577
- US-A- 5 202 071
- US-A- 5 338 169
- US-A- 5 382 148
- US-A- 5 401 154
- US-A- 6 093 354

## Beschreibung

Die Erfindung betrifft ein Verfahren zur unterbrechunglosen Herstellung faserverstärkte duroplastischer Halbzeugel sowie die verwendung dieses Verfahrens Verwendung finden diese Duroplaste als Bauteile u.a. im Automobilbereich sowie in der Elektroindustrie.

Bei der Herstellung von Faserverbundwerkstoffen und deren Einsatz in industriellen Anwendungen ist ein steigender Kostendruck auf den Verarbeiter zu verzeichnen. Zusätzlich nehmen die Anforderungen an flexible, prozesssichere Produktionstechnologien auf gleichbleibend hohem Qualitätsniveau ("Null-Fehler-Produktion") ständig zu. Der Verarbeiter muss dieser Situation durch Reduzierung der Kosten im Herstellungsprozess sowie der Materialkosten und durch Steigerung der Prozessflexibilität begegnen.

Für im Fliesspressverfahren hergestellte Bauteile aus thermoplastischen Faserverbunden haben sich Direktverfahren, hier speziell das LFT-D-ILC, bereits durchgesetzt, da sie den oben genannten Anforderungen und geänderten Rahmenbedingungen in besonderem Maße gerecht werden. Im Falle der im Fliesspressverfahren hergestellten duroplastischen Fäserverbundbauteile befinden sich derartige Direktverfahren bisher nicht im Einsatz, da die komplexen chemischen Vorgänge und deren prozesssichere Beherrschung sowie die aufwendige Anlagentechnik bisher als nicht realisierbar eingeschätzt wurde.

Neben den thermoplastischen Konkurrenzmaterialien sind die heute wirtschaftlich bedeutendsten Halbzeuggruppen die SMC- (engl. Sheet Molding Compound) bzw. BMC- (engl. Bulk Molding Compound) Formmassen mit einer weltweiten Produktion von etwa 1,1 Mio. t/a (Stand 1996). Diese lassen sich z.B. im sogenannten Fliesspressverfahren verarbeiten.

BMC-Pressmassen werden als "Stopfmassen" über Schneckenspritzgießmaschinen mit hoher Wirtschaftlichkeit verarbeitet. Die mechanischen Eigenschaften liegen jedoch wegen der Faserschädigung im Extruder und in den engen Zuführkanälen unter denen von herkömmlichen SMC-Teilen.

Die Mischung des Harzfüllstoffgemisches erfolgt üblicherweise in großen Behältern, so dass die jeweiligen SMC-Rezepturen chargenweise angesetzt werden müssen und im Anschluß den Misch- und Reifungsprozess durchlaufen.

Die Bereitstellung von Halbzeugen gleichbleibender Qualität ist z.B. aufgrund der Temperaturempfindlichkeit der reaktiven Harze schwer zu gewährleisten. Die Umgebungstemperatur und somit die Lagerungsbedingungen, die den Jahreszeiten entsprechende Vorkehrungen bedürfen, sind selten reproduzierbar, Einflüsse wie Transportdauer, Temperaturschwankungen sowie Luftfeuchtigkeit beeinträchtigen die Materialqualität, wodurch es zu hohen Ausschussquoten bzw. erhöhter Nacharbeit kommen kann. Um den hohen Qualitätsstandards speziell der Automobilindustrie gerecht zu werden, findet bei sicherheitsrelevanten bzw. hochwertigen Sichtbauteilen der Transport und die Lagerung des Halbzeugs unter Kühlung statt.

Die Reaktivität der Harze begrenzt die Lagerfähigkeit der Halbzeuge, so dass nach z.B. einer störungsbedingten Produktionsunterbrechung die Harzsysteme unterschiedliche Verarbeitungsqualitäten, nachweisbar mittels Untersuchung der Pressarbeit, Werkzeugfüllung und Plastizität, aufweisen.

Aus der WO 02/102577 A1 ist ein SMC-Verfahren bekannt, bei dem mit einer Kaskade von Extrudern gearbeitet wird. Weitere direkte Prozesse sind in US 5,338,169, US 6,093,354, US 5,401,154, US 5,202,071 sowie der US 5,382,148 beschrieben.

Ausgehend hiervon war es Aufgabe der vorliegenden Erfindung ein Verfahren zur Herstellung duroplastischer Halbzeuge bereitzustellen, das eine hohe Reproduzierbarkeit hinsichtlich des Endproduktes, also des Bauteils, gewährleisten soll. Gleichzeitig soll das Verfahren den bisher aus dem Stand der Technik bekannten logistischen Aufwand minimieren und somit eine kostengünstigere Herstellung ermöglichen.

Diese Aufgabe wird mittels des Verfahrens mit den Merkmalen des Anspruchs 1 gelöst. Die weiteren abhängigen Ansprüche zeigen vorteilhafte Weiterbildungen auf. In den Ansprüchen 12 und 13 wird die Verwendung des erfindungsgemäßen Verfahrens beschrieben.

Erfindungsgemäß wird ein Verfahren zur unterbrechungslosen Herstellung duroplastischer Halbzeuge mit den Merkmalen des Patentanspruches 1 bereitgestellt.

Als Halbzeuge sind im Rahmen dieser Anmeldung ebenso Formmassen zu verstehen.

Während aus dem Stand der Technik bislang für die Herstellung von Duroplasten diskontinuierliche Verfahren bekannt sind, d.h. die Verfahren zur Herstellung des Harzfüllstoffgemisches sowie zur Umwandlung des reaktiven Harzfüllstoffgemisches in das Halbzeug räumlich und zeitlich voneinander getrennt sind, konnte nun zum ersten Mal für die Duroplasten ein Verfahren bereitgestellt werden, das die unterbrechungslose, d.h. zeitlich und räumlich zusammenhängende Herstellung duroplastischer Halbzeuge sicherstellt.

Hieraus ergibt sich eine Vielfalt von Vorteilen gegenüber den aus dem Stand der Technik bekannten Verfahren. So können aufgrund der Verwendung von Rohstoffen und der Integration mehrerer Verfahrensschritte in einem einzigen zusammenhängenden Verfahrensablauf die Bauteilkosten deutlich reduziert werden. Es führt gleichzeitig zu einer erhöhten Effizienz des Herstellungsverfahrens, da zum einen der Energieverbrauch bei der Bauteilherstellung gesenkt, zum anderen aufgrund des nun nicht mehr nötigen Transports auf die gekühlte Lagerung der Halbzeuge verzichtet werden kann.

Gleichzeitig werden durch das erfindungsgemäße Verfahren anwendungsoptimierte Werkstoffkombinationen ermöglicht, die eine hohe Prozeß- bzw. Anlageflexibilität gewährleisten, z.B. durch individuelle Farbgebung der Halbzeuge während des Herstellungsverfahrens. Aufgrund der direkten Herstellung des Halbzeugs ohne Zwischenlagerung des reaktiven Harzfüllstoffgemisches wird es so möglich durch die Lagerung bedingte Veränderungen des Harzfüllstoffgemisches zu vermeiden, wodurch die Qualität der Halbzeuge und damit auch der Bauteile deutlich reproduzierbarer wird.

Vorzugsweise werden beim Herstellungsverfahren die Ausgangskompönenten über mindestens eine Dosiervorrichtung, der sogenannten Dosierstation, in den Extruder, der als eine Vormischeinheit dient, eingetragen und vorvermischt. Dabei werden die Komponenten bevorzugt getrennt nach Festkörper und flüssigen Komponenten bereitgestellt und zudosiert. Der Vorteil des Extruders gegenüber einem Chargenmischer liegt in der kontinuierlichen Zuführung der einzelnen Komponenten, wodurch eine hohe Prozessstabilität und die Reproduzierbarkeit der Rezepturen bei gleichzeitig geringen Materialmengen im Prozess erreicht werden kann.

Als Ausgangskomponenten kommen vor allem Polymere und/oder Harze sowie gegebenenfalls Füllstoffe, Additive und/oder Lösungsmittel in Betracht. Als Additive werden dabei vorzugsweise interne Trennmittel, Härter, thermoplastische Additive, Stabilisatoren, LPA's (Low Profile Additive), LSA's (Low Shrink Additive), und/oder Dispergierhilfen eingesetzt.

Nach der Vorvermischung werden die Ausgangskomponenten in eine Mischvorrichtung eingetragen. Hier erfolgt die Homogenisierung der Ausgangskomponenten, wobei gleichzeitig Verstärkungsfasern zugegeben werden. Als Mischvorrichtung kommen beispielsweise Rührer oder Kneter in Frage, bevorzugt aber Extruder und hier insbesondere Doppelschneckenextruder, die einen sehr hohen Homogenisierungsgrad ermöglichen.

Die Zugabe der Verstärkungsfaser erfolgt bevorzugt während der Homogenisierung, kann aber auch in einem separaten Schritt über eine eigene Vorrichtung erfolgen.

Die Verstärkungsfasern werden besonders bevorzugt während der Homogenisierung im Doppel-SchneckenExtruder in diesen eingetragen oder kontinuierlich ausgetragen oder zu Faserabschnitten zerschnitten. Dabei ist es durch die Verwendung des DoppelSchnecken-Extruders auf einfache Weise möglich, daß die Verstärkungsfasern eingezogen werden und dabei zu Faserabschnitten zerkleinert werden.

Als Verstärkungsfasern werden bevorzugt anorganische, organische und/oder Naturfasern eingesetzt. Besonders bevorzugt sind dabei Kohlenstoff oder Glasfasern.

Nach der Homogenisierung erfolgt die Vorvernetzung c) durch Bestrahlung, durch α oder β-Strahlung und/oder elektromagnetische Wellen. Besonders bevorzugt ist dabei die Verwendung von UV-Strahlung oder Mikrowellen. Während der Vorvernetzung wird dabei die für die Handhabung sowie für die Weiterverarbeitung erforderliche Viskosität gezielt eingestellt. Apparativ kann die Vorvernetzungszone beispielsweise als Keramikzylinder, der strahlungsdurchlässig gegenüber Mikrowellen oder UV-Strahlung ist, ausgestaltet sein. Die Bestrahlung führt durch Erwärmung zu einer Visoksitätsverminderung, welche die Quellung der mineralischen Füllstoffe beschleunigt. Der Vorteil des Einsatzes von Mikrowellen besteht in der gezielten Steuerung der Dauer, der Intensität und der Homogenität des E-nergieeintrages, wodurch der Vernetzungsgrad exakt eingestellt werden kann.

Das derart vorvernetzte Halbzeug kann nun direkt der Formgebung unterzogen werden, alternativ ist es aber auch möglich, einen Portionierungsschritt vorzuschalten, um das Halbzeug in leichter zu verarbeitende Chargen zu unterteilen. Hierfür können beispielsweise Schneidvorrichtungen oder Förderbänder eingesetzt werden.

Im abschließenden Schritt der Formgebung, der sich sowohl zeitlich als auch räumlich direkt an die Halbzeugherstellung anschließen kann, kann dann das gewünschte Bauteil hergestellt werden. Als Formgebungsprozesse werden dabei bevorzugt die Pressprozesse und/oder das Spritzgießen eingesetzt. Alternativ sind aber auch alle anderen aus dem Stand der Technik bekannten Formgebungsprozesse einsetzbar.

Mit diesem Verfahren können duroplastische Halbzeuge hergestellt werden.

Bauteile aus duroplastischen glasfaserverstärkten Formmassen zeichnen sich durch sehr gute mechanische Eigenschaften aus - auch bei erhöhten Einsatztemperaturen.

Verwendung findet das erfindungsgemäße Verfahren vorzugsweise in der Automobil-, Elektro-, Bau- und Lebensmittelindustrie sowie in Transport und Verkehr. In diesen Bereichen können mit dem erfindungsgemäßen Verfahren beliebige Bauteile hergestellt werden. Nur beispielhaft seien hierfür Armaturen, Motorhauben, Heckklappen und Stoßfänger genannt.

Anhand der folgenden Figuren soll der erfindungsgemäße Gegenstand näher erläutert werden, ohne diesen auf die hier dargestellten Sachverhalte einzuschränken.
- Fig. 1: zeigt eine schematische Darstellung des aus dem Stand der Technik bekannten Fließpress- verfahrens zur Herstellung von SMC (diskon- tinuierlich),
- Fig. 2: zeigt eine schematische Darstellung des er- findungsgemäßen Verfahrens zur Herstellung von duroplastischen glasfaserverstärkten Formmassen,
- Fig. 3: zeigt in einem Flussdiagramm eine verglei- chende Gegenüberstellung von Fließpressver- fahren (SMC) und erfindungsgemäßem Verfah- ren (DMC-D).

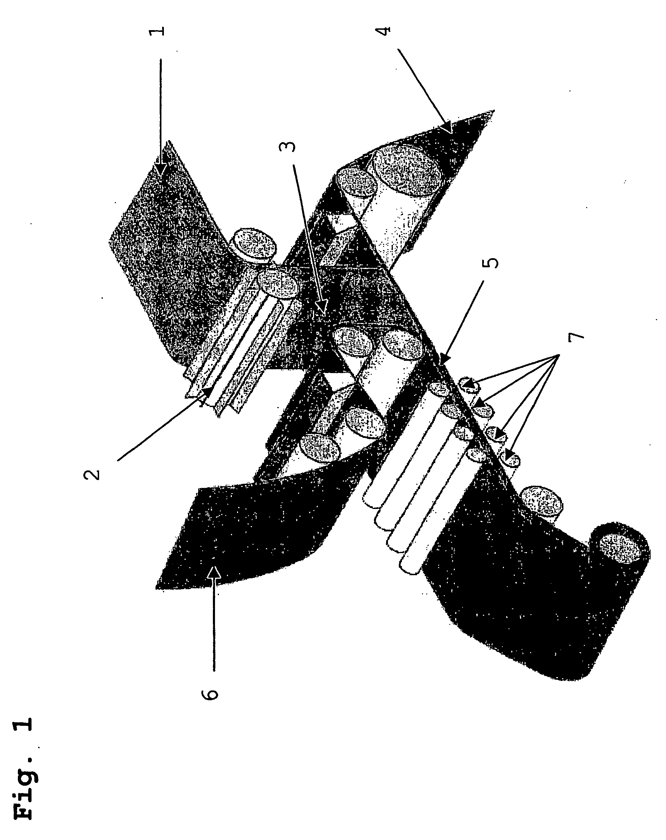

Bei dem in Fig. 1 dargestellten und aus dem Stand der Technik bekannten Fließpressverfahren werden Glasfaserrovings 1 von Spulen abgezogen und mit einem Schneidwerk 2 auf Längen von etwa 10 bis 50 mm zugeschnitten. Diese Schnittfasern 3 fallen dann regellos auf eine Trägerfolie 4, auf der die Hälfte der erforderlichen Menge an Harzfüllstoffgemisch 5 als dünner Film aufgetragen wurde. Nach dem Abdecken mit einer zweiten Trägerfolie 6, die die restliche Menge des Harzfüllstoffgemischs trägt, durchläuft dieses Paket eine Walzenstrecke mit gegenüberliegenden Verdichterrollen 7 auf beiden Seiten der Folie, in der die Imprägnierung und Verdichtung des Halbzeugs erreicht wird. Das mehrere Millimeter dicke flächenförmige Halbzeug wird anschließend entweder aufgewickelt oder zu Zuschnitten beliebiger Länge konfektioniert. Im Anschluss erfolgt eine Lagerung des Halbzeugs zur "Reifung" über mehrere Tage bis Wochen. Die Reifezeit kann dem gewünschten Verarbeitungsfenster entsprechend über die Reaktivität des Harzes eingestellt werden.

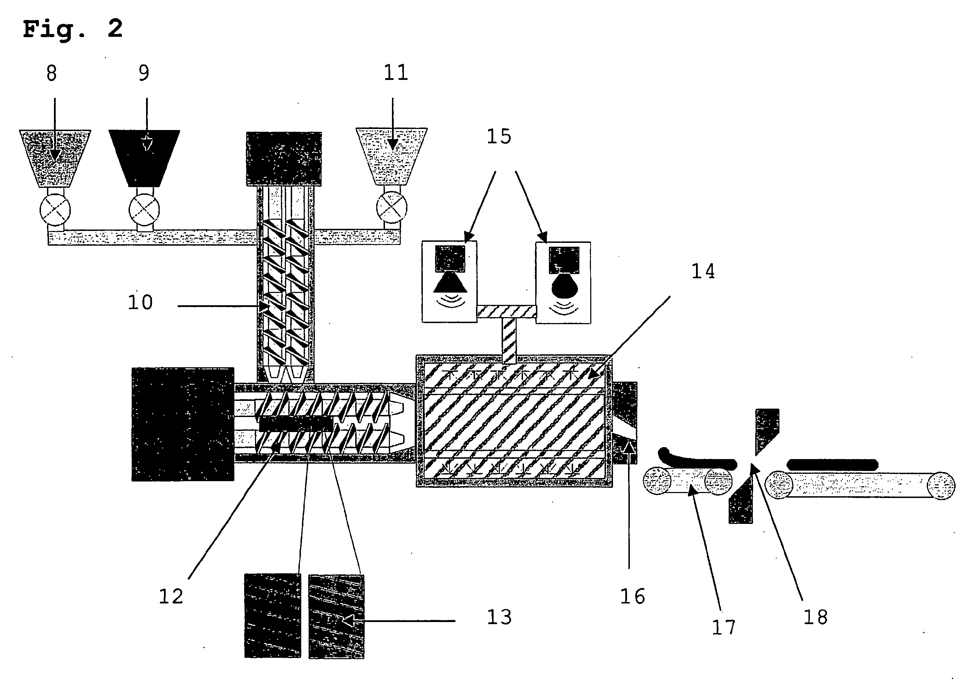

In Fig. 2 ist ein Ausführungsbeispiel des erfindungsgemäßen Verfahrens schematisch dargestellt. Zunächst werden über zwei Dosiervorrichtungen 8;9 die Ausgangskomponenten in einen Compoundierextruder 10 eingespeist. In gleicher Weise können über eine weitere Dosiervorrichtung 11 ein Füllstoff oder andere Additive zugesetzt werden. In dem Compoundierextruder 10 erfolgt so eine Vorvermischung der Ausgangskomponenten. Das vorgemischte Harzfüllstoffgemisch wird vom Compoundierextruder 10 in den Zuführschacht eines Doppelschneckenextruders 12 transportiert, in den auch die Glasfaserrovings 13 eingezogen werden. Im Doppelschneckenextruder 12 werden die Glasfasern gezielt gebrochen und mit dem aus dem Compoundierextruder 10 kommenden Harzfüllstoffgemisch homogenisiert. Nach der Homogenisierung erfolgt der Austrag in eine Vorvernetzungsstrecke, in welcher die für die Handhabung sowie die Weiterverarbeitung erforderliche Viskosität eingestellt wird. Die Vorvernetzung besteht hier aus einem keramischen Zylinder 14, der in Abhängigkeit von der gewählten Bestrahlungsart für Mikrowellen oder UV-Strahlung, aus der Strahlungsquelle 15 durchlässig ist. Aufgrund der durch die Bestrahlung herbeigeführte Erwärmung kommt es zu einer Viskositätsverminderung, welche die Quellung der mineralischen Füllstoffe beschleunigt. Von der Vorvernetzungsstrecke, auch Vorgelierstation genannt, wird die zähviskose Formmasse über eine Flachdüse 16 auf ein Abzugsband 17 befördert. Mit der hier angeordneten Schneideeinheit 18 lässt sich die Formmasse portionieren. Abschließend erfolgt dann der Transport z.B. in ein Presswerkzeug, in dem die Formgebung erfolgt.

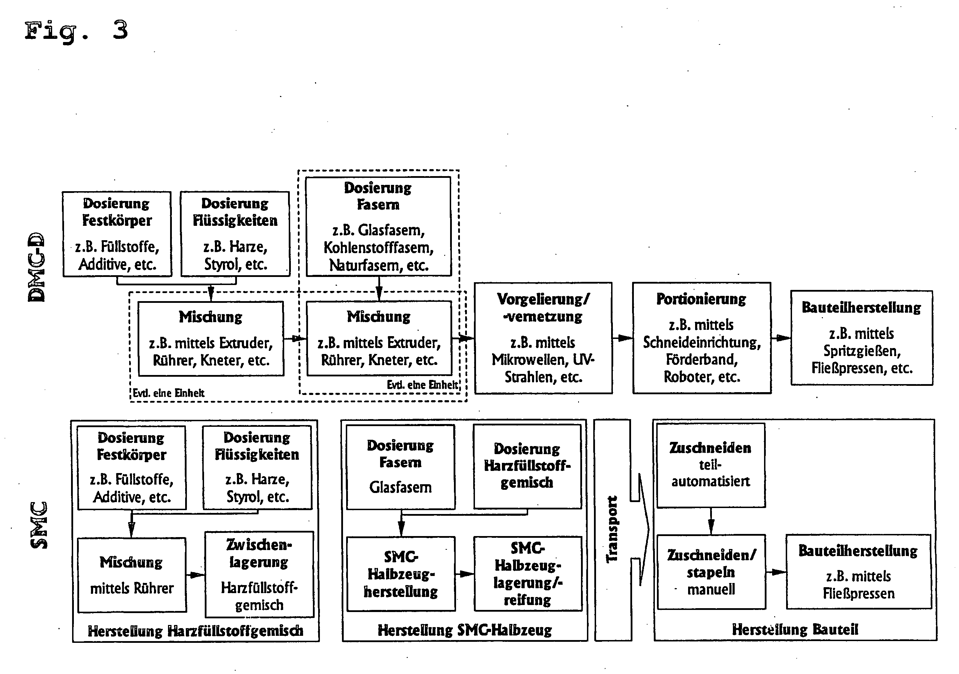

In Fig. 3 sind die beiden Verfahren, das aus dem Stand der Technik bekannte SMC und das erfindungsgemäße DMC-D nochmals anhand eines Flussdiagramms gegenübergestellt. Während erfindungsgemäß ein zusammenhängender Verfahrensablauf realisiert wird, erfolgt beim SMC-Verfahren die Herstellung der Formmassen über drei zeitlich und räumlich getrennte Verfahrensblöcke. Hier stellt gerade der Transport bzw. die Lagerung des Halbzeugs die Problemstelle des Verfahrens dar, die nun erfindungsgemäß beseitigt werden konnte.

## Patentansprüche

1. Verfahren zur unterbrechungslosen Herstellung faserverstärkter duroplastischer Halbzeuge mit folgenden Schritten:
a) Vorvermischung der Ausgangskomponenten in einem Extruder,
b) Homogenisierung der Ausgangskomponenten in einer Mischvorrichtung,
c) Vorvernetzung zum Halbzeug durch kontrollierte Energiezufuhr mittels α- oder β-Strahlung und/oder elektromagnetischer Wellem, wobei
d) während oder nach der Homogenisierung Verstärkungsfasern zugegeben werden.

2. Verfahren nach Anspruch 1,
**dadurch gekennzeichnet, dass** die Ausgangskomponenten über mindestens eine Dosiervorrichtung in den Extruder eingetragen und vorvermischt werden.

3. Verfahren nach mindestens einem der Ansprüche 1 oder 2,
**dadurch gekennzeichnet, dass** als Ausgangskomponenten Polymere oder Harze sowie gegebenenfalls Füllstoffe, Additive und/oder Lösungsmittel eingesetzt werden.

4. Verfahren nach Anspruch 3,
**dadurch gekennzeichnet, dass** die Additive ausgewählt sind aus der Gruppe interne Trennmittel, Härter, thermoplastische Additive, Stabilisatoren, LPA, LSA und/oder Dispergierhilfen.

5. Verfahren nach.mindestens einem der vorhergehenden Ansprüche,
**dadurch gekennzeichnet, dass** die Homogenisierung b) in einem Extruder, Rührer oder Kneter erfolgt.

6. Verfahren nach mindestens einem der vorhergehenden Ansprüche,
**dadurch gekennzeichnet, dass** die Verstärkungsfasern im Homogenisierungsschritt b) in einen Doppel-Schnecken-Extruder eingetragen, kontinuierlich ausgetragen werden oder zu Faserabschnitten zerschnitten werden.

7. Verfahren nach mindestens einem der vorhergehenden Ansprüche,
**dadurch gekennzeichnet, dass** als Verstärkungsfasern anorganische, organische und/oder Naturfasern, insbesondere Glasfasern oder Kohlenstofffasern, eingesetzt werden.

8. Verfahren nach mindestens einem der vorhergehenden Ansprüche,
**dadurch gekennzeichnet, dass** die kontrollierte Energiezufuhr durch UV-Strahlung oder Mikrowellen erfolgt.

9. Verfahren nach mindestens einem der vorhergehenden Ansprüche,
**dadurch gekennzeichnet, dass** eine Portionierung des Halbzeugs, insbesondere mittels Schneidvorrichtungen und/oder Förderbändern, erfolgt.

10. Verfahren nach mindestens einem der vorhergehenden Ansprüche,
**dadurch gekennzeichnet, dass** im direkten Anschluss die Formgebung des Halbzeugs zum Bauteil erfolgt.

11. Verfahren nach Anspruch 10,
**dadurch gekennzeichnet, dass** die Formgebung durch Pressprozesse und/oder Spritzgießen erfolgt.

12. Verwendung des Verfahrens nach mindestens einem der Ansprüche 1 bis 11 zur Herstellung von Bauteilen in der Automobil-, Elektro-, Bau-, Lebensmittelindustrie sowie in Transport und Verkehr.

13. Verwendung nach Anspruch 12 für die Herstellung von Armaturen, Motorhauben, Heckklappen oder Stoßfängern.

## Claims

1. Method for the uninterrupted production of fibre-reinforced, duroplastic semi-finished products with the following steps:
a) premixing the initial components in an extruder,
b) homogenising the initial components in a mixing device,
c) pre-crosslinking to form a semi-finished product by controlled energy supply by means of α- or β-radiation and/or electromagnetic waves,
d) reinforcing fibres being added during or after homogenisation.

2. Method according to claim 1,
**characterised in that** the initial components are introduced into the extruder and premixed via at least one metering device.

3. Method according to at least one of the claims 1 or 2,
**characterised in that** polymers or resins and also possibly fillers, additives and/or solvents are used as initial components.

4. Method according to claim 3,
**characterised in that** the additives are selected from the group of internal parting agents, hardeners, thermoplastic additives, stabilisers, LPA, LSA and/or dispersing agents.

5. Method according to at least one of the preceding claims,
**characterised in that** the homogenisation b) is effected in an extruder, agitator or kneader.

6. Method according to at least one of the preceding claims,
**characterised in that** the reinforcing fibres are introduced in homogenisation step b) into a twin-screw extruder, are continuously discharged or sliced into fibre portions.

7. Method according to at least one of the preceding claims,
**characterised in that** inorganic, organic and/or natural fibres, in particular glass fibres or carbon fibres, are used as reinforcing fibres.

8. Method according to at least one of the preceding claims,
**characterised in that** the controlled energy supply is effected by UV radiation or microwaves.

9. Method according to at least one of the preceding claims,
**characterised in that** a portioning of the semi-finished product, in particular by means of cutting devices and/or conveyor belts, is effected.

10. Method according to at least one of the preceding claims,
**characterised in that** the shaping of the semi-finished product to form the component is effected immediately thereafter.

11. Method according to claim 10,
**characterised in that** the shaping is effected by pressing processes and/or injection moulding.

12. Use of the method according to at least one of the claims 1 to 11 for the production of components in the automobile, electrical, construction, foodstuff industry and also in transport and communication.

13. Use according to claim 12 for the production of fittings, engine bonnets, tailgates or bumpers.

## Revendications

1. Procédé de fabrication continue de produits semi-finis, en matière duroplastiques, renforcée par des fibres et comprenant les étapes suivantes :
a) pré-mélange des composants de départ dans une extrudeuse,
b) homogénéisation des composants de départ dans un dispositif de mélange,
c) pré-réticulation pour obtenir un produit semi-fini par application contrôlée d'énergie par rayonnement α ou β et/ou par des ondes électromagnétiques, et
d) pendant ou après l'homogénéisation, on ajoute des fibres de renforcement.

2. Procédé selon la revendication 1,
**caractérisé en ce qu'**
on introduit les composants de départ par l'intermédiaire d'au moins un dispositif de dosage dans l'extrudeuse et on assure leur pré-mélange.

3. Procédé selon la revendication 1 ou 2,
**caractérisé en ce que**
comme composants de départ, on utilise des polymères ou des résines ainsi que le cas échéant des matières constituant des charges, des additifs et/ou des agents solvants.

4. Procédé selon la revendication 3,
**caractérisé en ce qu'**
on sélectionne les additifs dans le groupe interne des agents séparateurs, des durcisseurs, des additifs thermoplastiques, des stabilisateurs, LPA, LSA et/ou des agents de dispersion.

5. Procédé selon les revendications précédentes,
**caractérisé en ce qu'**
on effectue l'homogénéisation,
b) dans une extrudeuse, un agitateur ou un malaxeur.

6. Procédé selon les revendications précédentes,
**caractérisé en ce qu'**
on fournit les fibres de renforcement dans l'étape d'homogénéisation b), dans une extrudeuse à double vis, débitant en continu ou en découpant des segments de fibres.

7. Procédé selon les revendications précédentes,
**caractérisé en ce que**
comme fibres de renforcement, on utilise des fibres minérales, des fibres organiques et/ou des fibres naturelles notamment des fibres de verre ou des fibres de carbone.

8. Procédé selon les revendications précédentes,
**caractérisé en ce qu'**
on assure l'alimentation contrôlée en énergie par un rayonnement ultraviolet UV ou par des micro-ondes.

9. Procédé selon les revendications précédentes,
**caractérisé en ce qu'**
on réalise un portionnement du produit semi-fini notamment par des dispositifs de coupe et/ou des bandes transporteuses.

10. Procédé selon les revendications précédentes,
**caractérisé en ce qu'**
on fait directement la mise en forme du produit semi-fini pour obtenir une pièce.

11. Procédé selon la revendication 10,
**caractérisé en ce qu'**
on fait la mise en forme par un procédé de compression et/ou par une injection.

12. Utilisation du procédé selon les revendications 1 à 11 pour la fabrication de pièces dans l'industrie automobile, dans l'industrie électronique, dans l'industrie de 1a construction, dans l'industrie des produits alimentaires ainsi que dans les transports et la circulation.

13. Utilisation selon la revendication 12 pour la fabrication d'armatures, de capots de moteur, de coffres ou de pare-chocs.
